# EUROPEAN PATENT APPLICATION

(11) **EP 1 655 930 A1**
(43) Date of publication of application: **10.05.2006**
(21) Application number: 05024331.0
(22) Date of filing: 08.11.2005
(51) Int. Cl.: H04M 1/247, H04M 1/725, H04R 7/04

(54) **Portable apparatus having a flat-panel speaker incorporated in the display and control method therefor**

(30) Priority: 09.11.2004 JP 2004324967
(71) Applicant: NEC CORPORATION, Tokyo (JP)
(72) Inventor: Kanai, Eriko, Kamikawamachi Kodama-gun, Saitama (JP)
(74) Representative: Glawe, Delfs, Moll

(57) **Abstract**

A portable apparatus includes a sound output device for outputting a sound by vibrating a plate-shaped transparent member. The plate-shaped transparent member overlies a display screen. A display means displays an image on the display screen, and a display controller controls the display meansso that the display means displays ear placement information on the display screen showing where to place a user's ear.

## Description

This application is based upon and claims the benefit of priority from Japanese Patent Application No. 324967/2004 filed on November 9, 2004, the content of which is incorporated by reference.

### BACKGROUND OF THE INVENTION

### 1. Field of the Invention

The present invention relates to a portable apparatus such as a mobile phone or a PHS (personal handyphone system) terminal and a display control method for that apparatus and, more specifically, to a portable apparatus having a speaker that is installed at a display and outputs sounds by vibrating a transparent plate-shaped member, and a display control method for that apparatus. A speaker that outputs sounds by vibrating a transparent plate-shaped member is hereafter called a "flat-panel speaker."

### 2. Description of the Related Art

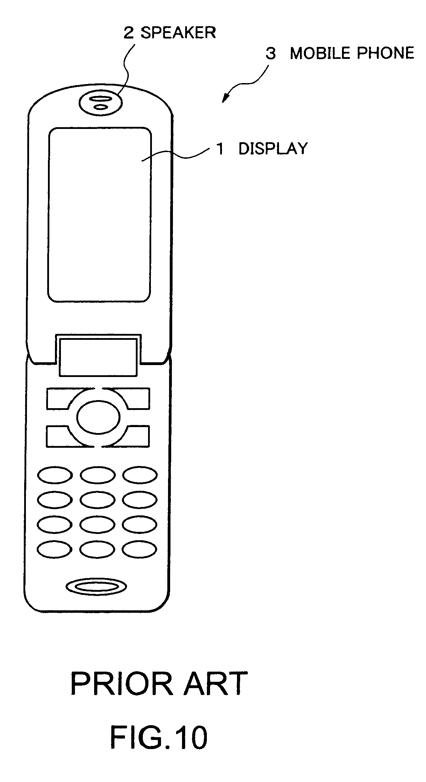

A portable apparatus (for example, a mobile phone such as a conventional mobile phone 3 shown in FIG. 10 or a PHS terminal) having a display for displaying visual information such as characters or images, and a speaker for outputting sound information such as voices of the intended party, voicemail messages, or voice memos is widely used. In recent years, mobile phones are often used for an electronic mail (e-mail) function, a camera function, a game function, etc. rather than just for the telephone function. Therefore, a demand for larger display screens is showing a steep rise in the market.

One technology to achieve larger display screens is disclosed in Japanese Patent Laid-open Application Publication No. 164977/2002 (referred to hereafter as "the related art") . This is a technology for outputting sounds from a flat-panel speaker installed on the front side of a display of an electronic apparatus such as a mobile phone. A mobile phone utilizing this technology does not need a speaker such as a speaker 2 of the conventional mobile phone 3 shown in FIG. 10, since the display screen can be enlarged by the size of the speaker 2. A user of the mobile phone disclosed in the related art must place her/his ear to the display.

However, a user who does not know she/he is supposed to place her/his ear onto the display when listening to the sounds and a user who is accustomed to using a conventional mobile phone such as the mobile phone 3 shown in FIG. 10 with the speaker 2 installed near the top may possibly place her/his ear onto the position where a conventional speaker would be located rather than onto the display. Such a user cannot hear sounds well on the mobile phone.

Further, even a user who knows that she/he must place her/his ear onto the display to listen to the sounds on a mobile phone of this kind might be confused about where exactly on the display she/he should place her/his ear because the display of this mobile phone is considerably larger than the speaker 2 of the mobile phone 3 shown in FIG. 10. In this case, there is a problem that she/he wastes time in looking for the right position to place her/his ear before starting to speak on the phone.

### SUMMARY OF THE INVENTION

An object of this invention is to provide a portable apparatus and a method for resolving at least one of the above problems.

Another object of this invention is to provide a convenient portable apparatus having a flat-panel speaker installed at its display and a display control method for that portable apparatus. Especially this invention has an object to provide a portable apparatus and a display control method for that portable apparatus wherein an unfamiliar user can easily place her/his ear onto a flat-panel speaker without confusion.

Still another object of this invention is to provide a portable apparatus and a display control method for that portable apparatus wherein even an unfamiliar user can hear loud or clear sounds.

Still another object of this invention is to provide a portable apparatus and a display control method for that portable apparatus wherein an unfamiliar user can place her/his ear easily onto a flat-panel speaker without confusion and, moreover, which does not hamper her/his other operations.

Still another object of this invention is to provide a portable apparatus and a display control method wherein an unfamiliar user can place her/his ear easily onto a flat-panel speaker without confusion and a familiar user does not become frustrated when using the portable apparatus.

A portable apparatus for one aspect of this invention may include sound output means for outputting a sound by vibrating a plate-shaped transparent member, display means for displaying an image on a display screen, the plate-shaped transparent member being placed in front of at least a portion of the display screen, and display control means for controlling the display means, wherein the display means is responsive to the display control means for displaying information on the display screen at a location of ear placement.

In the portable apparatus for the first aspect of the invention, the display means can display the information based on an incoming phone call.

In the portable apparatus for the first aspect of the invention, the display means preferably does not display the information after a phone call is terminated.

The portable apparatus for the first aspect of the invention may further include event detection means for detecting an event, wherein the display means displays the information based on an output from the event detection means.

The portable apparatus for the first aspect of the invention can further include a call start switch for starting a call, wherein the display means displays the information after the event detection means detects that the call start switch is operated.

The portable apparatus for the first aspect of the invention can further include a call end switch for ending a call, wherein the display means does not display the information after the event detection means detects that the call end switch is operated.

In the portable apparatus for the first aspect of the invention, the information may show a best reception position.

The portable apparatus for the first aspect of the invention preferably further includes input means for inputting the best reception position and storage means for storing the best reception position, wherein the display control means reads the best reception position from the storage means and the display means displays the information based on the best reception position.

The portable apparatus for the first aspect of the invention can further include selection means for selecting whether to display the information, wherein the display means displays the information in case that displaying the information is allowed.

A portable apparatus for another aspect of this invention may include a speaker to output a sound by vibrating a plate-shaped transparent member, a display device to display an image on a display screen, the plate-shaped transparent member being placed in front of at least a portion of the display screen, and a processor to control the display device, wherein the display device is responsive to the processor to display information at a location on the display screen for ear placement.

A method of controlling a display device of a portable apparatus having a speaker to output a sound by vibrating a plate-shaped transparent member on a display screen for another aspect of the invention may include controlling the display device so that the display device displays information showing where to place a user's ear.

In the method of controlling a display device of a portable apparatus having a speaker to output a sound by vibrating a plate-shaped transparent member on a display screen for the third aspect of the invention, the information may show a best reception position.

This invention greatly improves usability of a portable apparatus because, according to this invention, a portable apparatus having a flat-panel speaker at its display shows ear placement information at a predetermined position on the display screen. Therefore, its user can easily recognize the right position where she/he should place her/his ear and can place her/his ear there without confusion. According to this invention, especially a user who does not know she/he is supposed to place her/his ear onto the display when listening to the sounds and a user who is accustomed to using a conventional mobile phone whose speaker is installed near the top can easily use a portable apparatus having a flat-panel speaker installed at its display.

According to this invention, a portable apparatus having a flat-panel speaker at the display allows its user to hear louder or clearer sounds.

According to this invention, an unfamiliar user can place her/his ear easily onto a flat-panel speaker without confusion and this invention does not hamper her/his other operations.

According to this invention, an unfamiliar user can place her/his ear easily onto a flat-panel speaker without confusion and a familiar user does not become frustrated when using.

### BRIEF DESCRIPTION OF THE DRAWINGS

FIG. 1 is a block diagram of a mobile phone of a first exemplary embodiment.
FIG. 2 shows ear placement information data stored in a storage section of a mobile phone of a first exemplary embodiment.
FIG. 3 shows an example of the ear placement information on the display of a mobile phone of a first exemplary embodiment.
FIG. 4 is a flow chart showing an operation of a mobile phone of a first exemplary embodiment when an incoming call arrives.
FIG. 5 is an example of a standby screen of a mobile phone of a first exemplary embodiment.
FIG. 6 is an example of a display screen of a mobile phone of a first exemplary embodiment when an incoming call is arriving.
FIG. 7 is an example of a display screen of a mobile phone of a first exemplary embodiment during a call.
FIG. 8 is a block diagram of a mobile phone of a second exemplary embodiment.
FIG. 9 is a block diagram of a mobile phone of a third exemplary embodiment.
FIG. 10 is a plan view of a mobile phone of a conventional mobile phone which has a speaker seperate from its display and does not have a flat-panel speaker.

### DETAILED DESCRIPTION OF THE PREFERRED EMBODIMENTS

### 1. Block diagram of a mobile phone of a first exemplary embodiment

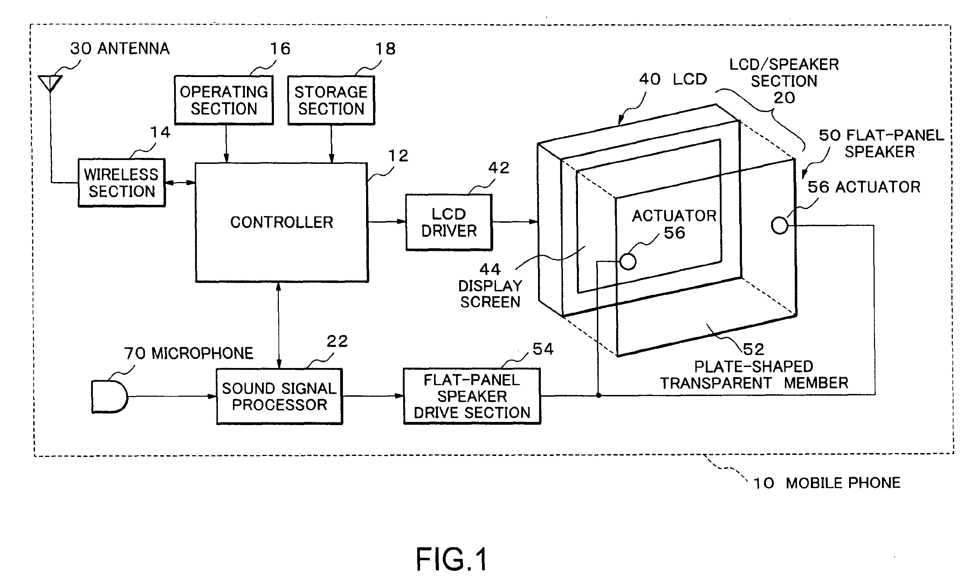

FIG. 1 is a block diagram of a mobile phone 10 of a first exemplary embodiment of this invention. The mobile phone 10 comprises a controller 12 (display control means), a wireless section 14 (event detection means), an operating section 16 (event detection means), a storage section 18, an LCD (liquid crystal display)/speaker section 20, a sound signal processor 22, an antenna 30, an LCD driver 42, a flat-panel speaker drive section 54, and a microphone 70.

The controller 12 includes a CPU (central processing unit). The controller 12 executes programs stored in the storage section 18 and controls the entire mobile phone 10.

The antenna 30 is connected to the wireless section 14. The wireless section 14 transmits and receives electromagnetic waves via the antenna 30. The wireless section 14 outputs a signal showing various events (for example, an incoming call, the end of a call, etc.) to the controller 12.

The operating section 16 includes, for example, a call start button, a call release and power-off button, dial buttons for entering characters and phone numbers, or a selection button for selecting and executing menu items, etc. The operating section 16 outputs a signal showing an event to the controller 12 based on, for example, operating patterns of these buttons. The event is, for example, a start of displaying the mail send screen, an end of displaying a phone number, etc.

The storage section 18 comprises a semiconductor device such as a ROM (read only memory) or a RAM (random access memory) . The CPU, which is a part of the controller 12, can access the storage section 18. Data or executable programs are stored in the storage section 18. The data are, for example, an address book, incoming call melodies, etc. A dedicated slot is formed in the mobile phone 10 for inserting a recording medium as needed. For example, this recording medium is utilized for storing large volumes of data such as images, sounds, etc.

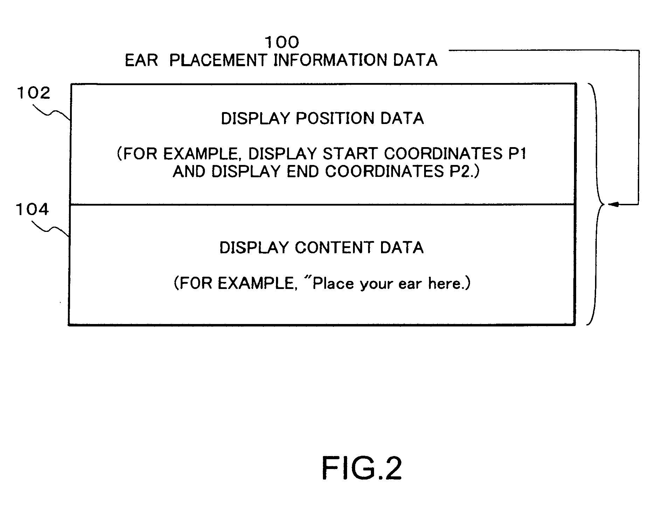

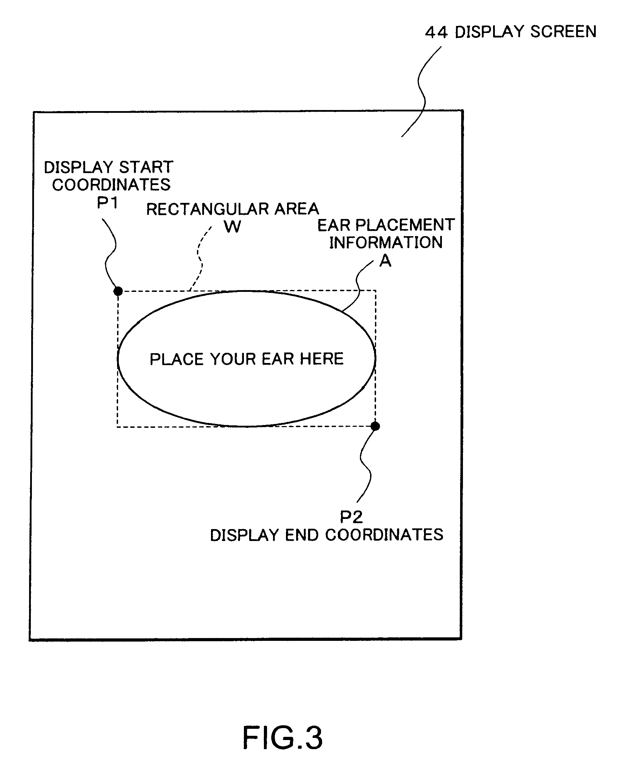

Ear placement information data 100 (FIG. 2) are stored in the storage section 18. (In the practice of the invention, the information data can take a variety of forms including a texture, a graphical advertisement, a caller ID, graphical symbols, etc.) The ear placement information data 100 are data for displaying ear placement information A. The ear placement information A is information for a user to recognize what part of the LCD/speaker section 20 she/he should place her/his ear onto (FIG. 3). The ear placement information 100 comprises, for example, display position data 102 and display content data 104 as shown in FIG. 2. The display position data 102 are data for showing in what position on a display screen 44 the ear placement information A is to be displayed. The display position data 102 include, for example, display start coordinates P1 and display end coordinates P2 on the display screen 44. The display content data 104 are data for showing display contents of the ear placement information A. The display content data 104 include, for example, character data such as "place your ear here." FIG. 3 shows a practical example of the ear placement information A that is displayed on the display screen. The ear placement information A is displayed in a rectangular area W defined by the display start coordinates P1 and the display end coordinates P2.

The LCD/speaker section 20 comprises an LCD 40 and a flat-panel speaker 50.

The LCD 40 is a device for displaying visual information such as characters and images. The LCD 40 is controlled by the controller 12 via the LCD driver 42.

The flat-panel speaker 50 includes a plate-shaped transparent member 52 such as an acrylic plate, and actuators 56 such as piezoelectric devices. Each of the actuators 56 is installed at a predetermined position (for example, at the middle of the left side or the right side as shown in FIG. 1) on the plate-shaped transparent member 52. These actuators 56 output a sound by vibrating the plate-shaped transparent member 52 based on a sound signal from the flat-panel speaker drive section 54.

The flat-panel speaker 50 is installed on the front side of the LCD 40. The flat-panel speaker 40 could be larger or smaller than the display screen 44. A user places her/his ear onto the LCD 40 to listen to the sound.

The sound signal processor 22 has the following three functions.

The first function of the sound signal processor 22 is a receiver function. The sound signal processor 22 converts real-time and non-real-time digital sound signals into analog sound signals and outputs them to the flat-panel speaker drive section 54. The real-time digital sound signal is received as electromagnetic waves by the antenna 30 and then demodulated in the wireless section 14. The non-real-time digital sound signal is, for example, voice memos that are stored in the storage section 18 and answering machine messages. The flat-panel speaker drive section 54 vibrates the actuators 56 based on these analog sound signals. Sounds are in this way outputted from the plate-shaped transparent member 52. The receiver function is a function for a user to listen to sound information that should not be loudly outputted from a speaker such as sound information she/he does not want others to hear. Sound information of this kind includes, for example, voices of the intended party during a call, guidance sent from a message center or a server, answering machine messages, voice memos, etc.

The second function of the sound signal processor 22 is a speaker function. The speaker function is a function for a user to hear sound information that is outputted from a speaker or, in other words, sound information that others are allowed to hear. Sound information of this kind includes, for example, incoming call melodies, button-depress sounds, etc. The sound signal processor 22 converts digital sound signals stored in the storage section 18 into analog sound signals and outputs them to the flat-panel speaker drive section 54.

The first and second functions share the flat-panel speaker 50 as sound output means. These two functions have different gains and volumes. The sound signal processor 22 contains processing circuits not shown in the drawings for each of these functions, and switches over the processing circuits depending on the function.

The third function of the sound signal processor 22 is a microphone sound processing function. The sound signal processor 22 converts analog sound signals inputted from the microphone 70 into digital sound signals and outputs them to the wireless section 14. These digital sound signals are modulated by the wireless section 14 and then outputted as electromagnetic waves from the antenna 30.

### 2. Mobile phone operation in the first exemplary embodiment

The following descriptions explain an operation of the mobile phone 10 of the first exemplary embodiment when an incoming call arrives from another party. In the mobile phone 10 of the first exemplary embodiment, the ear placement information A is displayed slightly below the center of the display screen 44. (It would be understood that the information can be displayed at any location on the display screen that will be useful for ear placement.)

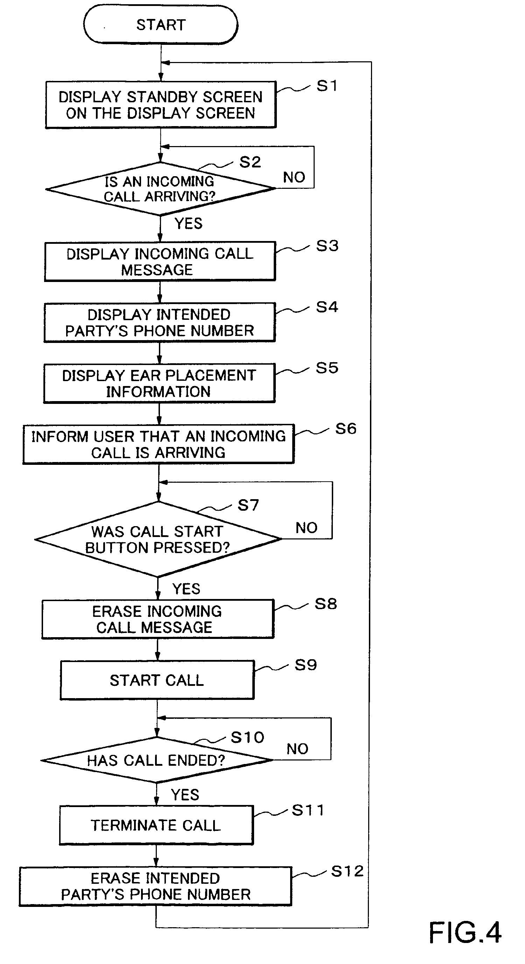

FIG. 4 is a flow chart showing the operation of the mobile phone 10 when an incoming call arrives. The program to carry out this operation is stored in the storage section 18 and the controller 12 reads the program to execute it.

The display start coordinates P1 and the display end coordinates P2 are set in the display position data 102 in advance. According to these coordinates, the ear placement information A is displayed slightly below the center of the display screen 44 so that the ear placement information A does not interfere with the other display contents. The other display contents are, for example, a content showing that an incoming call is arriving, a content showing the signal strength, etc. The character data "place your ear here" are set in advance in the display content data 104.

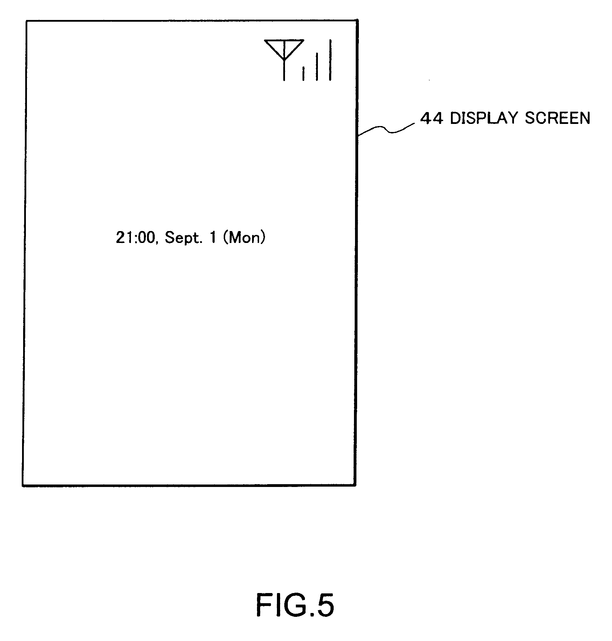

While the mobile phone 10 is in the standby state, the controller 12 displays a standby screen on the display screen 44 (step S1) (FIG. 5).

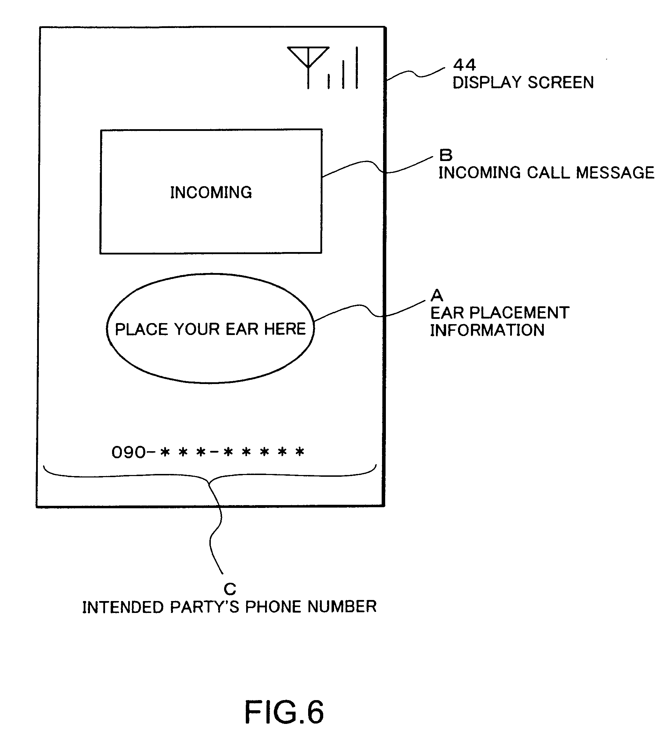

Next, the controller 12 checks whether or not a signal showing an incoming call has been inputted from the wireless section 14 (step S2). When a signal showing an incoming call has been inputted, the controller 12 displays an incoming call message B on the display screen 44 (step S3) (FIG. 6) and displays the phone number C of the intended party on the display screen 44 (step S4) (FIG. 6).

The controller 12 next accesses the storage section 18 and acquires the display position data 102 and the display content data 104 of the ear placement information 100. The controller 12 displays the ear placement information A on the display screen 44 by displaying the display content data 104 within the range specified by the display position data 102 (step S5) (FIG. 6).

The controller 12 next informs the user that an incoming call is arriving by outputting an incoming call melody from the flat-panel speaker 50 (step S6). More specifically, the controller 12 accesses the storage section 18 and acquires a digital sound signal for the incoming call melody and outputs the digital sound signal to the sound signal processor 22. The sound signal processor 22 selects the processing circuit for using the flat-panel' speaker 50 as a speaker (the second function described above or, in other words, the speaker function) and outputs the digital sound signal to this processing circuit. The processing circuit converts the digital sound signal to an analog sound signal and outputs the analog sound signal to the flat-panel speaker drive section 54. The flat-panel speaker drive section 54 vibrates the actuators 56 based on the analog sound signal in order to vibrate the plate-shaped transparent member 52. The incoming call melody is in this way outputted from the flat-panel speaker 50.

The controller 12 may also drive a vibrator or an LED (light emitting diode) not shown in the drawing in order to inform the user that an incoming call is arriving.

The controller 12 checks whether the call start button was pressed or not (step S7). More specifically, the controller 12 checks whether or not a signal showing that the call start button was pressed was inputted from the operating section 16.

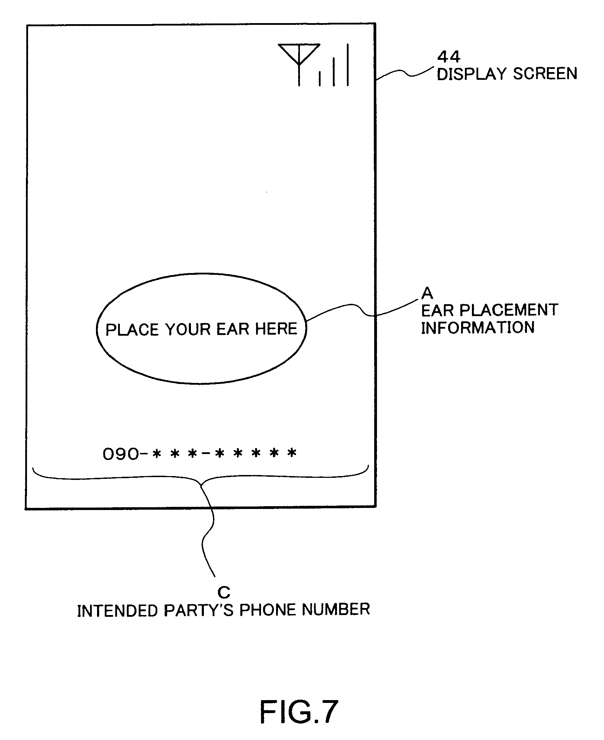

When a signal was inputted showing the call start button was pressed, the controller 12 next erases the incoming call message B in order to show that a call is in progress on the mobile phone 10, while the ear placement information A and the phone number C are still displayed (step S8) (FIG. 7).

The controller 12 next starts the call (step S9). More specifically, the controller 12 activates the wireless section 14, the microphone 70, the sound signal processor 22, and the flat-panel speaker 50. The sound signal processor 22 selects the processing circuit for using the flat-panel speaker 50 as the speaker (according to the first function described above or, in other words, the receiver function). The user can in this way listen to voices outputted from the flat-panel speaker 50 and can transmit her/his voices via the microphone 70 to the intended party.

The controller 12 next checks whether the call has ended (step S10). More specifically, the controller 12 checks whether or not a signal showing that the call release button was pressed was inputted from the operating section 16 and whether or not a signal showing that the call has ended was inputted from the wireless section 14.

When judging that the call has ended, the controller 12 terminates the call (step S11), erases the intended party's phone number C on the display screen 44 (step S12), and returns to step S1.

The mobile phone 10 of the first exemplary embodiment is configured to display the ear placement information A on the display screen 44 of the LCD 40 from the time when an incoming call arrives until the end of the call. Its user can therefore place her/his ear onto the flat-panel speaker 50 according to the ear placement information A without confusion.

In the first exemplary embodiment, the ear placement information A is displayed slightly below the center of the display screen 44. However, the place where the ear placement information A of the invention is displayed is not limited to this position. The ear placement information A can be displayed at various positions in various shapes and sizes as needed on the display screen 44.

### 3. Second exemplary embodiment

In a mobile phone 10 of a second exemplary embodiment, the ear placement information A is displayed at a position where the sound from the flat-panel speaker 50 can be best heard.

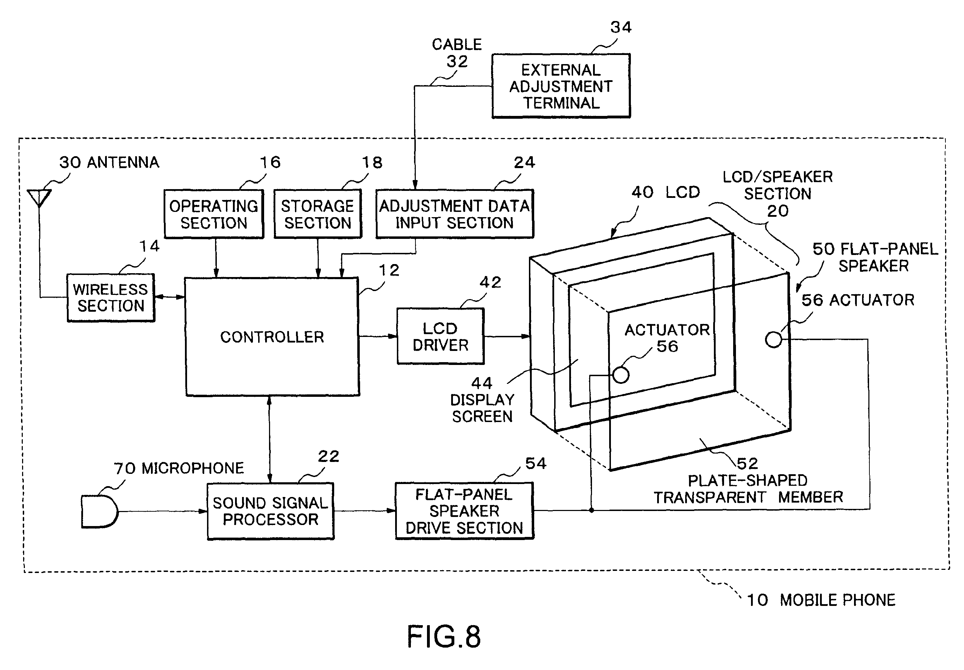

The block diagram of the mobile phone 10 of the second exemplary embodiment shown in FIG. 8 is basically the same as that of the mobile phone 10 of the first exemplary embodiment shown in FIG. 1. The mobile phone 10 of the second exemplary embodiment, however, differs from the mobile phone 10 of the first exemplary embodiment in further containing an adjustment data input section 24. This adjustment data input section 24 is connected via a cable 32 to an external adjustment terminal 34. The adjustment data input section 24 acquires various adjustment data from the external adjustment terminal 34.

The external adjustment terminal 34 and the mobile phone 10 are connected to each other via the cable 32 in the inspection process at the factory. For example, an RS-232C cable or a USB (universal serial bus) cable is used as the cable 32. The external adjustment terminal 34 contains, for example, a measuring device for measuring the volume. This measuring device is utilized for measuring the overall volume distribution of the flat-panel speaker 50. This measuring device specifies the region with a loudest volume or with a clearest sound. The measuring device sends the coordinate data of the region to the external adjustment terminal 34. The external adjustment terminal 34 sends the coordinate data to the adjustment data input section 24 through the cable 32. The controller 12 acquires the coordinate data from the adjustment data input section 24. The controller 12 stores the acquired coordinate data in the ear placement information 100 in the storage section 18. The controller 12 next displays the ear placement information A within the area specified by these coordinates, for example, during step S5 of FIG. 4. Aside from the above points, the mobile phone 10 of the second exemplary embodiment is basically identical to the mobile phone 10 of the first exemplary embodiment.

The mobile phone 10 of the second exemplary embodiment is in this way configured to display the ear placement information A in a position where sounds from the flat-panel speaker 50 can be best heard. Therefore, its user can hear louder or clearer sounds.

### 4. Third exemplary embodiment

A mobile phone 10 of a third exemplary embodiment has a hinge structure around the center of its frame and is folded in two. The ear placement information A is displayed when a signal showing the frame is opened is received.

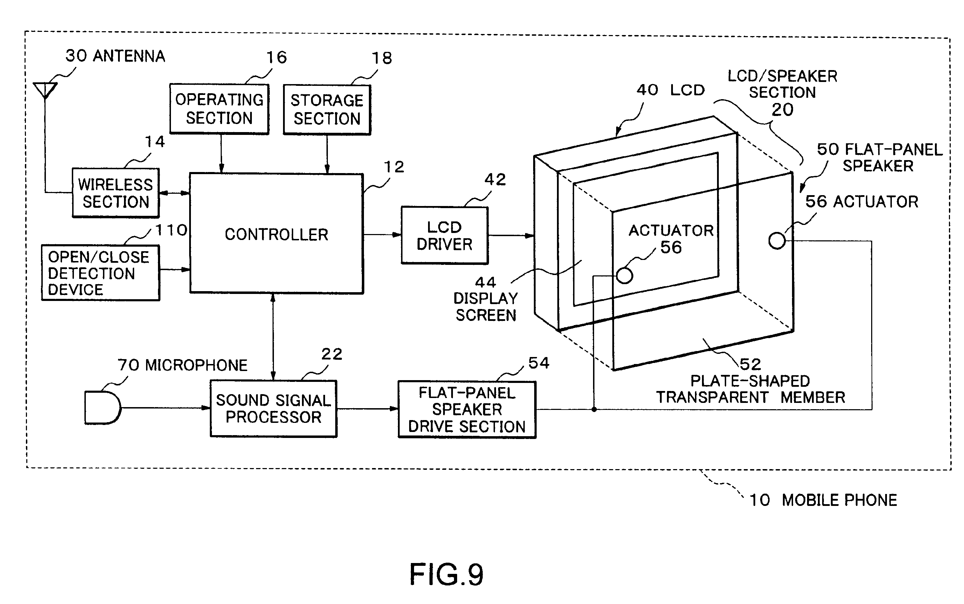

The block diagram of the mobile phone 10 of the third exemplary embodiment shown in FIG. 9 is basically the same as that of the mobile phone 10 of the first exemplary embodiment shown in FIG. 1. The mobile phone 10 of the third exemplary embodiment, however, differs from the mobile phone 10 of the first exemplary embodiment in further containing event detection means called an open/close detection device 110 for detecting the open/closed state of the frame. When an incoming call is arriving in the folded state, the mobile phone 10 of the third exemplary embodiment automatically shifts to the speaking state upon opening of the frame. The controller 12 displays the ear placement information A when receiving a signal showing an event of opening of the frame from the open/close detection device 110.

### 5. Other Variations

The LCD 40 and the plate-shaped transparent member 52 need not to be directly connected and can be indirectly connected to each other. For example, a cushioning material may be inserted to prevent both the components from striking each other. The cushioning material is not shown in FIG. 1, FIG. 8, or FIG. 9.

The ear placement information A is "place your ear here" as shown in FIG. 3, FIG. 6, and FIG. 7 in the above embodiments. However, the ear placement information A of this invention is not limited to this character string. The ear placement information A may be expressed by other character strings. Moreover, the ear placement information A need not to be a character-string. The ear placement information A may be, for example, a symbol, a picture, an icon, or an image. The symbol, the picture, the icon, or the image preferably may visualize an ear, an earphone etc. The ear placement information A may also be expressed in a color different from a background color. The ear placement information A may take any information such as a texture, a graphical advertisement, a caller ID, graphical symbols, etc. so long as is displayed at the location for ear placement. As long as it achieves the function of this invention, the ear placement information A can be any object that allows a user to recognize the right position.

The mobile phone 10 of the first exemplary embodiment displays the ear placement information A from the time when an incoming call arrives until the end of the call as shown in FIG. 4. However, this invention is not limited to this configuration. The mobile phone of this invention may display the ear placement information A from, for example, the time when the call start button is pressed rather than the time when an incoming call arrives.

The mobile phone of this invention may display or erase the ear placement information A based on various events. During a call, in some cases, the user may carry out some other operations removing her/his ear from the mobile phone. The user may operate the buttons of the operating section 16, for example, in order to call up a phone number stored in the storage section 18 to the display screen 44 or in order to send an e-mail. The latter case is described here as an example. The controller 12 controls the LCD driver 42 to erase the ear placement information A on the display screen 44 when receiving a signal showing an event of a beginning of an e-mail send screen from the operating section 16. The controller 12 controls the LCD driver 42 to display the ear placement information A on the display screen 44 again when receiving a signal showing an event of an end of the e-mail send screen from the operating section 16. In this way, the ear placement information A displayed on the display screen 44 does not interfere with other operations such as sending an e-mail, etc.

Events for displaying or erasing the ear placement information A on the display screen of the mobile phone of this invention are not limited to the above described examples. The ear placement information A may be erased, for example, when the user sees digital camera images or television during a phone call.

Cases in which the ear placement information A is displayed are not limited to the case of a phone call such as the above described case. The ear placement information A may be displayed also in cases other than a phone call. The ear placement information A can be displayed at any time when the flat-panel speaker 50 is used as a receiver. For example, the ear placement information A may be displayed when a user listens to, for example, music that is downloaded from a pay website and stored on a recording medium, voice memos or answering machine messages stored in the storage section 18, guidance sent from a message center or a server, voices to read out e-mail text, etc.

The mobile phone of this invention may be configured to allow a user to select whether or not to display the ear placement information A. For example, an item allowing selection of whether or not to display the ear placement information A can be added to the menu in order to make it possible for a user to change the operation mode of the mobile phone 10. If "Display ear placement information" is selected, then the ear placement information A is displayed in the predetermined conditions. If "Do not display ear placement information" is selected, then the ear placement information A is not displayed even in the predetermined conditions. This configuration is preferable because a familiar user, who already knows the right position and does not feel the necessity for seeing the ear placement information A every time, does not become frustrated.

In the above-described embodiments, a mobile phone is covered as an example of a portable apparatus. This invention, however, is applicable to a portable apparatus of all types such as a PHS terminal, a PDA (personal digital assistant), etc. Moreover, this invention is not limited to the above-described frame structure for the mobile phone. This invention may apply to a portable apparatus of a wide range of structures such as a portable apparatus integrated into one unit, portable apparatus of the folding type having a hinge structure, and a portable apparatus of the rotation type, etc.

The previous description of these embodiments is provided to enable a person skilled in the art to make and use the present invention. Moreover, various modifications to the embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by limitations of the claims and equivalents.

## Claims

1. A portable apparatus comprising:
sound output means for outputting a sound by vibrating a plate-shaped transparent member;
display means for displaying an image on a display screen, said plate-shaped transparent member being placed in front of at least a portion of said display screen; and
display control means for controlling said display means,
wherein said display means is responsive to said display control means for displaying information on said display screen at a location of ear placement.

2. The portable apparatus according to claim 1,
wherein said display means displays said information based on an incoming phone call.

3. The portable apparatus according to claim 1,
wherein said display means does not display said information after a phone call is terminated.

4. The portable apparatus according to claim 1, further comprising:
event detection means for detecting an event,
wherein said display means displays said information based on an output from said event detection means.

5. The portable apparatus according to claim 3, further comprising:
a call start switch for starting a call,
wherein said display means displays said information after said event detection means detects that said call start switch is operated.

6. The portable apparatus according to claim 3, further comprising:
a call end switch for ending a call,
wherein said display means does not display said information after said event detection means detects that said call end switch is operated.

7. The portable apparatus according to claim 1,
wherein said information shows a best reception position.

8. The portable apparatus according to claim 7, further comprising:
input means for inputting said best reception position; and
storage means for storing said best reception position,
wherein said display control means reads said best reception position from said storage means and
said display means displays said information based on said best reception position.

9. The portable apparatus according to claim 1, further comprising:
selection means for selecting whether to display said information,
wherein said display means displays said information in case that displaying said information is allowed.

10. A portable apparatus, comprising:
a speaker to output a sound by vibrating a plate-shaped transparent member;
a display device to display an image on a display screen, said plate-shaped transparent member being placed in front of at least a portion of said display screen; and
a processor to control said display device,
wherein said display device is responsive to said processor to display information at a location on said display screen for ear placement.

11. A method of controlling a display device of a portable apparatus having a speaker to output a sound by vibrating a plate-shaped transparent member on a display screen, comprising:
controlling said display device so that said display device displays information on said display screen showing where to place a user's ear.

12. The method of controlling a display device of a portable apparatus having a speaker to output a sound by vibrating a plate-shaped transparent member in front of at least a portion of a display screen according to claim 11,
wherein said information shows a best reception position.
